# FASCICULE DE BREVET EUROPEEN

(11) **EP 3 580 555 B1**
(45) Date de publication et mention de la délivrance du brevet: **24.01.2024**
(21) Numéro de dépôt: 18706430.8
(22) Date de dépôt: 06.02.2018
(51) Int. Cl.: G01N 27/9013

(54) **ENSEMBLE D'INSPECTION DE TUBES AVEC UNE SONDE À COURANTS DE FOUCAULT ET PROCÉDÉ ASSOCIÉ**
ROHRINSPEKTIONSEINHEIT MIT WIRBELSTROMSONDE UND ENTSPRECHENDES VERFAHREN
TUBE INSPECTION UNIT WITH EDDY CURRENT PROBE AND CORRESPONDING METHOD

(30) Priorité: 10.02.2017 FR 1751124
(43) Date de publication de la demande: 18.12.2019
(73) Titulaire: FRAMATOME, 92400 Courbevoie (FR)
(72) Inventeur: KERNIN, Yann, 71390 Granges (FR); PIRIOU, Marc, 71100 Chalon sur Saône (FR); DECITRE, Jean-Marc, 91460 Marcoussis (FR); NOZAIS, Frédéric, 78180 Montigny-le-Bretonneux (FR)
(74) Mandataire: Lavoix
(86) Numéro de dépôt international: PCT/EP2018/052916
(87) Numéro de publication internationale: WO 2018/146081

(56) Documents cités:
- EP-A1- 2 485 046
- WO-A1-2010/115963
- WO-A2-02/095383
- FR-A1- 2 904 693
- US-A1- 2003 025 496
- Postolache Octavian ET AL: "GMR array uniform eddy current probe for defect detection in conductive specimens", MEASUREMENT., vol. 46, no. 10, 16 July 2013 (2013-07-16) , pages 4369-4378, XP055904533, GB ISSN: 0263-2241, DOI: 10.1016/j.measurement.2013.06.050

## Description

La présente invention concerne un ensemble d'inspection de tubes et un procédé d'inspection de tubes.

Le document WO 2011/12639 décrit une sonde à courants de Foucault, comprenant une pluralité d'inducteurs et une pluralité de récepteurs, les récepteurs étant des magnétorésistances. Les inducteurs sont alimentés par un courant sinusoïdal. Cela génère des courants de Foucault utilisés pour l'inspection.

La réponse des magnétorésistances possèdent une zone limitée de fonctionnement sensiblement linéaire donnée. Dans cette zone de fonctionnement sensiblement linéaire, la résistance de la magnétorésistance dépend sensiblement linéairement du champ magnétique. En dehors de la zone de fonctionnement sensiblement linéaire, l'exploitation des données acquises par les récepteurs est compromise. En effet la résistance du récepteur n'est plus une fonction linéaire du champ magnétique. Ainsi, les résultats ne sont plus exploitables facilement. De plus, la zone sensiblement linéaire de la réponse des GMR n'est pas forcément centrée autour d'un champ magnétique voisin de 0.

Une idée est de mesurer un champ magnétique tel que la magnétorésistance fonctionne dans sa zone de fonctionnement sensiblement linéaire.

Le document FR 2 851 337 décrit un ensemble d'inspection comprenant une bobine excitatrice, un récepteur et un circuit de polarisation. La magnétorésistance est polarisée par le circuit de polarisation et fonctionne ainsi dans la zone de fonctionnement sensiblement linéaire.

Le document « GMR array uniform eddy current probe for defect détection in conductive specimens » d'Octavian Postolache et al., dans la revue Measurement 46, décrit l'usage d'une bobine de polarisation agencée au-dessus d'une matrice de GMR pour polariser chaque magnétomètre.

Cependant, l'ajout d'un circuit de polarisation complexifie l'ensemble d'inspection. L'ensemble d'inspection est, par exemple, plus difficilement miniaturisable, ce qui pose des problèmes d'intégration plus particulièrement dans le cas de sondes réalisées pour l'inspection des tubes de générateurs de vapeur des réacteurs à eau pressurisée (REP) des centrales nucléaires, de diamètre limité (de l'ordre de 20mm de diamètre intérieur).

De plus, l'ajout du circuit de polarisation est décrit pour un unique récepteur. Dans le cas d'une pluralité de récepteurs, si à chaque récepteur est associé un circuit de polarisation, alors les circuits de polarisation risquent d'interagir avec les récepteurs auxquelles ils ne sont pas associés. Ainsi, il n'est pas assuré que les récepteurs fonctionneront chacun dans leur zone de fonctionnement sensiblement linéaire.

Un but de l'invention est donc de fournir un ensemble d'inspection simple permettant une inspection fiable et rapide de tubes.

A cet effet, l'invention a pour objet un ensemble d'inspection selon la revendication 1.

Selon des modes particuliers de l'invention, l'ensemble d'inspection présente l'une ou plusieurs caractéristiques des revendications 2 à 8 et/ou la caractéristique suivante, prise(s) isolément ou suivant toute(s) combinaison(s) techniquement possible(s) :
- l'ensemble d'inspection est un ensemble d'inspection de tubes d'un générateur de vapeur d'une centrale nucléaire.

L'invention a en outre pour objet un procédé d'inspection de tubes selon la revendication 9.

Selon des modes particuliers de l'invention, le procédé d'inspection présente l'une ou plusieurs caractéristiques des revendications 10 à 14, prise(s) isolément ou suivant toute(s) combinaison(s) techniquement possible(s).

D'autres caractéristiques et avantages de l'invention apparaîtront à la lecture de la description qui va suivre, donnée uniquement à titre d'exemple et faite en se référant aux dessins annexés, sur lesquels :
- la figure 1 est une vue schématique en coupe d'un ensemble d'inspection selon un mode de réalisation de l'invention,
- la figure 2 est une vue schématique du film flexible et du circuit de l'ensemble d'inspection de la figure 1 à plat,
- la figure 3 est une cartographie d'un tube d'après un premier mode de réalisation du procédé de l'invention,
- la figure 4 est la cartographie de la figure 3 après un traitement d'image,
- la figure 5 est une vue schématique d'éléments actifs au cours d'une acquisition d'après un deuxième mode de réalisation du procédé de l'invention, et
- la figure 6 est une cartographie d'un tube d'après le deuxième mode de réalisation du procédé de l'invention.

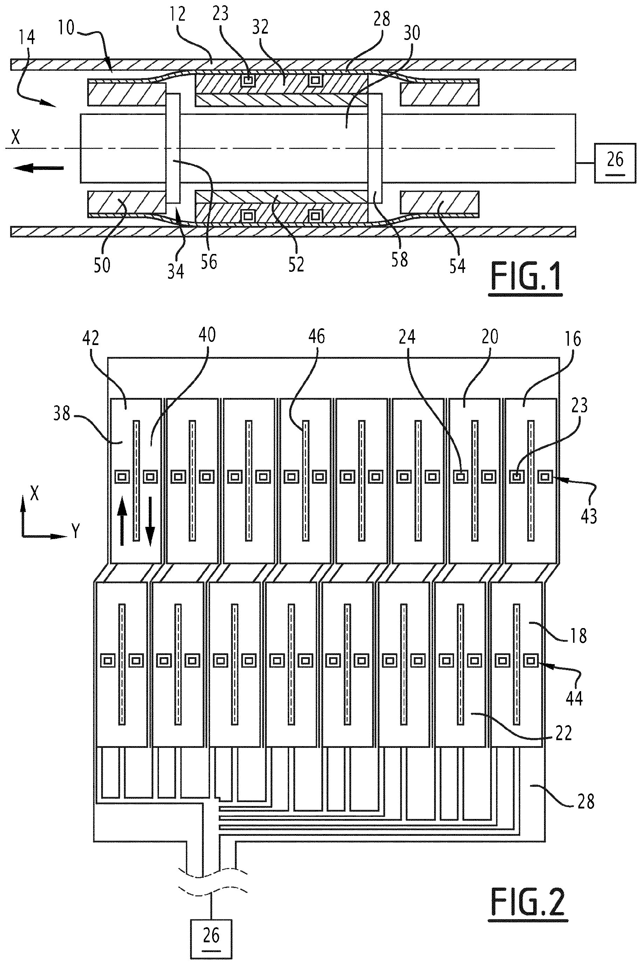

Un ensemble d'inspection 10 selon l'invention est représenté à la figure 1 et partiellement représenté à la figure 2. Un tel ensemble d'inspection est particulièrement adapté pour l'inspection d'un tube 12.

L'ensemble d'inspection 10 est typiquement un ensemble d'inspection de tubes d'un générateur de vapeur d'une centrale nucléaire.

L'ensemble d'inspection 10 comprend une sonde à courants de Foucault 14.

La sonde comprend une pluralité d'inducteurs 16 à 22 et une pluralité de récepteurs 23, 24.

L'ensemble d'inspection 10 comprend en outre un contrôleur 26.

La sonde 14 comprend en outre un corps 30, un film 28 entourant le corps 30, une mousse 32 entre le film 28 et le corps 30, et un système de bagues coulissantes 34.

En référence à la figure 1, les inducteurs 16 à 22 sont des bobines reliées au contrôleur 26.

Chaque inducteur 16 à 22 a ici la forme d'un anneau rectangulaire, comprenant une première branche 38, une deuxième branche 40 et deux bandes d'extrémité 42.

Chaque inducteur est ici une piste continue et agencée de manière à obtenir la forme globale d'anneau rectangulaire. La piste réalise une pluralité de tours, un espace étant laissé entre chaque tour de la piste.

Les première et deuxième branches 38, 40 sont parallèles l'une à l'autre. Elles comprennent chacune des extrémités.

Chaque bande d'extrémité 42 raccorde des extrémités respectives des première et deuxième branche 38, 40.

Lorsqu'un courant circule dans un des inducteurs 16 à 22, le courant circulant dans la première branche 38 a un sens opposé au courant circulant dans la deuxième branche 40.

La première branche 38 et la deuxième branche 40 sont ainsi aptes à générer chacune une nappe de courant de sens opposé l'une à l'autre.

Les inducteurs 16 à 22 sont placés selon une première rangée 43 et une deuxième rangée 44.

La première rangée 43 s'étend suivant une direction latérale Y.

La deuxième rangée 44 s'étend parallèlement à la première rangée 43. Elle est décalée par rapport à la première rangée 43 suivant une direction longitudinale X.

Les directions latérale Y et longitudinale X sont perpendiculaires entre elles.

Les première et deuxième branches 38, 40 de chaque inducteur 16 à 22 s'étendent principalement selon la direction longitudinale X. Ainsi, le courant circule principalement selon cette direction.

La première rangée 43 comprend le même nombre d'inducteurs que la deuxième rangée 44.

Les inducteurs d'une même rangée 43, 44 sont disposés latéralement régulièrement. Ils sont par exemple disposés avec un pas régulier compris entre 1,5 mm et 1,8 mm, et par exemple sensiblement égal à 1,65 mm.

Les inducteurs 16, 20 de la première rangée 43 sont décalés par rapport aux inducteurs 18, 22 de la deuxième rangée 44 longitudinalement et latéralement.

Ce décalage permet notamment d'augmenter la résolution de l'inspection en divisant par deux l'espacement entre les récepteurs GMR.

Chaque inducteur de la deuxième rangée 44 est relié en série à un inducteur de la première rangée 43. Chaque inducteur de la première rangée 43 n'est relié qu'à un seul inducteur de la deuxième rangée 44.

Un récepteur 23, 24 est placé au niveau de chaque première branche 38 et de chaque deuxième branche 40 des inducteurs 16 à 22, plus particulièrement sensiblement au centre de chaque première branche 38 et de chaque deuxième branche 40.

Les récepteurs 23, 24 sont des magnétorésistances.

La résistance des magnétorésistances dépend du champ magnétique environnant. Chaque magnétorésistance présente une courbe caractéristique de la résistance en fonction de la valeur du champ magnétique suivant une direction préférentielle.

Les magnétorésistances possèdent une zone de fonctionnement sensiblement linéaire, c'est-à-dire qu'une partie de la courbe caractéristique est sensiblement une droite.

Les récepteurs 23, 24 sont ici orientés tel que la direction préférentielle correspond à la direction latérale Y, afin d'obtenir un signal de réponse sur toute la longueur du défaut, et non pas seulement aux extrémités du défaut comme ce serait le cas avec une orientation selon la normale à la surface.

Le contrôleur 26 est programmé pour injecter dans les inducteurs 16 à 22 une tension donnée.

La tension a une composante sinusoïdale et une composante continue non nulle.

La composante sinusoïdale de la tension est non nulle.

En référence à la figure 1, le corps 30 s'étend suivant un axe principal.

La forme du corps 30 est adaptée au tube à inspecter. Le corps 30 est, par exemple, cylindrique ou ovale. Il est ainsi particulièrement adapté dans l'inspection des tubes à section ronde ou ovale.

Le corps 30 est particulièrement adapté dans le cas de l'inspection d'un tube par l'intérieur de celui-ci.

Le corps 30 est, par exemple, creux, l'espace intérieur défini par le corps étant, par exemple, utilisé pour faire passer un câblage.

En variante, le corps est creux et l'ensemble d'inspection est apte à inspecter un tube par l'extérieur en entourant ledit tube.

Le film flexible 28 est, par exemple, du polyimide (par exemple de la marque Kapton ^{®}) ou du PEEK.

Un circuit électrique est apte à être gravé ou déposé sur le film flexible 28.

Les inducteurs 16 à 22 et les récepteurs 23, 24 sont montés sur le film flexible 28 dans la disposition décrite précédemment.

Dans un mode de réalisation, les inducteurs 16 à 22 sont gravés ou déposé directement sur le film flexible 28. Dans le cas de la gravure, la largeur de la gravure est sensiblement égale à 30 µm et l'isolement entre deux gravures adjacentes est sensiblement égal à 60 µm.

Les inducteurs 16 à 22 sont reliés au contrôleur 26 au moins partiellement par un circuit gravé ou déposé sur le film flexible 28. Le circuit est, par exemple, relié à des câbles connectés au contrôleur et placés dans le corps.

Les récepteurs 23, 24 sont montés sur le film selon la méthode de puce retournée (nommée « flip chip » en anglais), dans laquelle les contacts sur chaque récepteur et sur le circuit du film flexible se font face, c'est-à-dire que les surfaces de contact sont directement opposées. Les récepteurs 23, 24 sont également reliés au contrôleur 26.

Le film flexible 28 est enroulé autour du corps 30, tel que l'axe principal du corps soit confondu avec la direction longitudinale X.

La direction latérale Y correspond à la circonférence du corps 30.

Les récepteurs de chaque rangée sont alors espacés d'un pas angulaire compris entre 8° et 12,5°, et par exemple sensiblement égal à 11,25°.

Le film flexible est pourvu d'entailles 46. Les entailles 46 sont parallèles les unes aux autres et à la direction longitudinale X.

Chaque entaille sépare, par exemple, partiellement la première branche 38 et la deuxième branche 40 d'un inducteur.

Avantageusement, la mousse 32 est placée entre le corps 30 et le film flexible 28.

La mousse 32 est apte à s'expanser, c'est-à-dire que le volume occupé par la mousse augmente.

Cela permet notamment de plaquer le film flexible contre le tube à inspecter une fois l'ensemble d'inspection inséré dans le tube. Le film flexible est apte à se conformer à l'expansion de la mousse, notamment grâce aux entailles 46.

De plus, un ensemble d'inspection donné est ainsi apte à inspecter des tuyaux ayant des rayons différents.

Le système de bagues coulissantes 34 comprend une bague avant 50, une bague centrale 52, une bague arrière 54, une butée avant 56 et une butée arrière 58.

Les termes « avant » et « arrière » renvoient ici à un sens arbitraire selon la direction longitudinale X. Ici, on dira que l' « avant » est situé à gauche sur la figure 1 et l' « arrière » à droite.

Les bagues 50, 52, 54 sont montées mobiles autour du corps 30 en translation suivant l'axe X.

Les butées 56, 58 sont fixes par rapport au corps 30. La butée avant 56 est placée entre la bague avant 50 et la bague centrale 52. La butée arrière 58 est placée entre la bague centrale 52 et la bague arrière 54.

Le film flexible 28 est fixé à la bague avant 50 et à la bague arrière 54. La mousse 32 est fixée à la bague centrale 52.

Lorsque le corps 30 est déplacé vers l'avant au sein d'un tube, les bagues se déplacent vers l'arrière relativement au corps 30. La bague avant 50 vient buter contre la butée avant 56. Le film flexible 28 est alors tendu par la bague arrière 54 qui est entraînée vers l'arrière et la bague avant 50 qui est maintenue fixe relativement au corps.

Lorsque le corps 30 est déplacé vers l'arrière au sein d'un tube, les bagues se déplacent vers l'avant relativement au corps 30. La bague arrière 54 vient buter contre la butée arrière 58. Le film flexible 28 est alors tendu par la bague arrière 54 qui est maintenue fixe et la bague avant 50 qui est entraînée vers l'avant relativement au corps.

Un premier procédé d'inspection d'un tube mettant en oeuvre un ensemble d'inspection tel que décrit précédemment va maintenant être décrit.

Un ensemble d'inspection tel que décrit précédemment est fourni. Il est inséré à une extrémité de la partie du tube à inspecter, tel que l'axe du tube est selon la direction longitudinale X.

Le procédé d'inspection comprend une étape d'acquisition du tube.

Au cours de l'étape d'acquisition, le contrôleur 26 injecte une tension ayant une composante sinusoïdale et une composante continue non nulles aux bornes des inducteurs.

Les inducteurs sont ainsi parcourus par un courant continu, appelé courant de polarisation.

Le courant entraîne l'établissement d'un champ magnétique statique.

Pour le courant donné, le champ magnétique environnant les récepteurs est tel que les récepteurs fonctionnent dans leur zone de fonctionnement sensiblement linéaire. Il sera dit que les récepteurs ont un centre de polarisation compris dans la zone de fonctionnement sensiblement linéaire.

Cette polarisation est notamment obtenue par l'ajout d'une composante continue à la tension aux bornes des inducteurs qui permet d'obtenir un champ magnétique statique de la valeur adéquate.

Ainsi la résistance de la magnétorésistance dépend sensiblement linéairement de la composante du champ magnétique suivant la direction de sensibilité préférentielle. Il est donc possible de mesurer précisément cette composante de champ magnétique présent au niveau du récepteur.

Un éventuel défaut du tube suivant la direction préférentielle entraîne une modification de la composante du champ magnétique selon cette direction. Il est alors possible de détecter avec fiabilité un défaut dans le tube selon la direction préférentielle, et, par exemple, d'en mesurer la dimension.

La composante continue de la tension est, par exemple, comprise entre 3,2 V et 3,6 V.

La composante sinusoïdale de la tension présente une fréquence, par exemple comprise entre 1 kHz et 10 MHz, et une amplitude crête à crête, par exemple, comprise entre 5V et 10V.

Le courant est par exemple compris entre 30 mA et 50 mA, et par exemple, égal à 40 mA.

Tous les récepteurs de la sonde sont activés.

Au cours de l'étape d'acquisition, la sonde est déplacée en translation au sein d'un tube selon la direction longitudinale X à une vitesse donnée. La vitesse est par exemple comprise entre 5 mm/s et 1000 mm/s, et par exemple sensiblement égale à 25 mm/s.

Le pas des acquisitions par les récepteurs suivant la direction longitudinale X est compris entre 0,05 mm et 0,2 mm, et par exemple sensiblement égale à 0,1 mm.

A chaque position de la sonde au sein du tube, une colonne 64 de points 62 est acquise.

Les signaux ainsi obtenus sont alors recalés afin de corriger le décalage induit par le positionnement en quinconce des éléments de la sonde.

Ainsi, pendant l'étape d'acquisition, un ensemble rectangulaire de points 62 du tube est acquis par les récepteurs.

Un point 62 d'une colonne 64 correspond à un récepteur à un moment donné. A chaque point, est associée une valeur représentative du champ magnétique au niveau du récepteur au moment de l'acquisition. La valeur représentative est par exemple directement la résistance de la magnétorésistance ou la tension différentielle aux bornes d'un pont formé de quatre éléments magnétorésistifs du récepteur et alimenté en tension.

La valeur est ici représentée par la coloration du point par une nuance de gris, la nuance étant plus claire lorsque le champ magnétique mesurée selon l'axe préférentiel est plus important.

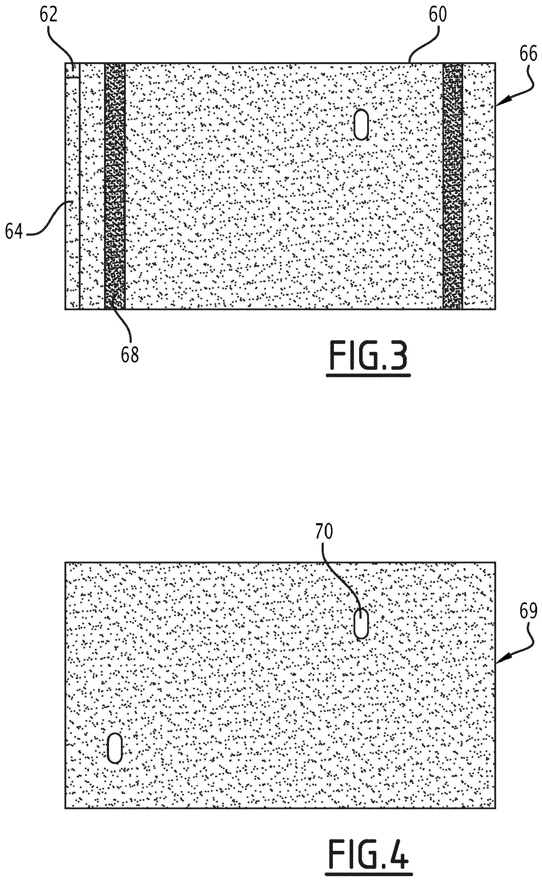

L'ensemble des points colorés forme une cartographie 66 représentant le tube, représentée à la figure 3.

Dans certains cas, on observe au moins un ensemble 68 de colonnes plus foncées sur la cartographie.

Cet ensemble 68 de colonnes est, par exemple, dû à un effet de bord à l'extrémité du tube.

Pour la cartographie 66, une valeur d'équilibrage est déterminée. La valeur d'équilibrage est, par exemple, la moyenne des valeurs représentatives des points de la cartographie. En variante, la valeur d'équilibrage est la valeur représentative d'un point de la colonne où l'on sait qu'il n'y a pas de défauts.

Puis, pour chaque point, à la valeur représentative est soustraite la valeur d'équilibrage de la colonne à laquelle le point appartient.

Après ce traitement d'image, on obtient une cartographie 69 dans laquelle les effets de bord sont lissés, comme représenté à la figure 4.

On détecte ensuite les zones de points pour lesquels la valeur représentative est sensiblement différente de la moyenne de l'ensemble des valeurs représentatives. Par exemple, le rapport (rapport signal à bruit) entre la valeur représentative et la moyenne est supérieur ou égal à 3 décibels.

Les récepteurs magnétiques étant sensibles à la composante choisie sur toute la longueur du défaut, le dimensionnement de cette longueur est possible par analyse du signal.

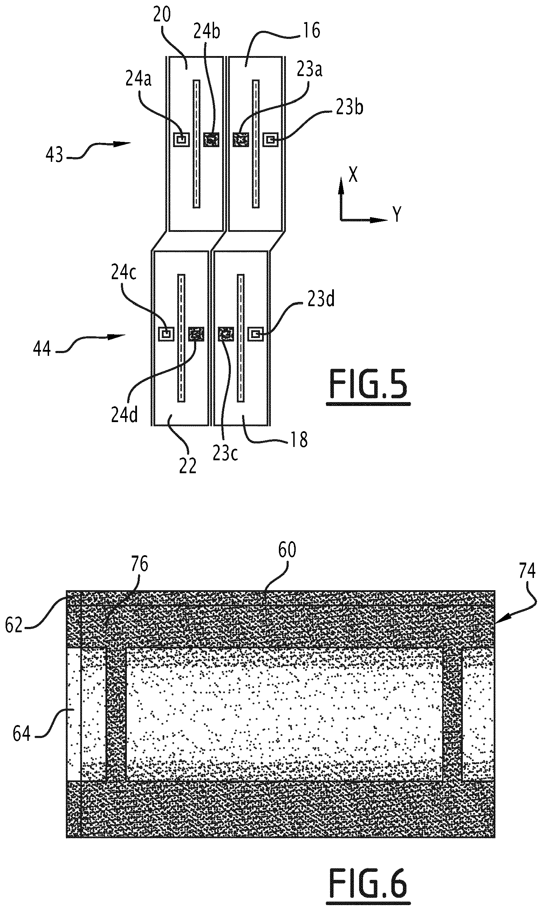

Un deuxième procédé d'inspection d'un tube mettant en oeuvre un ensemble d'inspection tel que décrit précédemment va maintenant être décrit en référence à la figure 5.

De même que précédemment, un ensemble d'inspection tel que décrit précédemment est fourni et le procédé comprend une étape d'acquisition du tube.

L'ensemble d'inspection est de même placé dans le tube à une première extrémité de la partie du tube à inspecter.

Au cours de l'étape d'acquisition, le contrôleur 26 injecte une tension ayant une composante sinusoïdale et une composante continue non nulle aux bornes de quatre inducteurs uniquement.

La composante sinusoïdale est non nulle.

La tension est injectée dans deux inducteurs adjacents 16, 20 de la première rangée 43 d'inducteurs et les inducteurs 18, 22 de la deuxième rangée 44 reliés à ces inducteurs 16, 20 comme représenté à la figure 5.

Un récepteur 23a, 23c, 24d, 24b seulement est activé par inducteur 16, 18, 20, 22 aux bornes duquel une tension est injecté. Pour chaque inducteur, le récepteur activé est du côté de l'inducteur adjacent sous tension.

De même, les inducteurs sous tension sont parcourus par un courant.

Le courant entraîne l'établissement d'un champ magnétique.

Le champ magnétique environnant les récepteurs activés est tel que les récepteurs fonctionnent dans leur zone de fonctionnement sensiblement linéaire. La tension présente, par exemple, les mêmes caractéristiques que précédemment.

Au cours de l'étape d'acquisition, la sonde est déplacée selon le mouvement suivant :
- déplacement longitudinal de la première extrémité à une deuxième extrémité de la partie du tube à analyser,
- déplacement longitudinal de la deuxième extrémité à la première extrémité,
- rotation d'un angle donné,
- réitération des étapes précédentes jusqu'à avoir fait un tour d'au moins 360° sur elle-même.

La vitesse de déplacement de la sonde est par exemple comprise entre 5mm/s et 15mm/s pendant les déplacements longitudinaux, et par exemple sensiblement égale à 10 mm/s.

L'angle de rotation est par exemple compris entre 8° et 15°, et par exemple sensiblement égal à 12°.

A chaque réitération, au cours d'un des déplacements longitudinaux, une acquisition est réalisée.

Par exemple, à chaque déplacement longitudinal de la deuxième extrémité à la première extrémité, une ligne 60 de points 62 du tube est acquise par les récepteurs. Un point correspond à une position de la sonde à un moment donné pendant l'étape d'acquisition. Le pas des acquisitions suivant la direction longitudinale X est compris entre 0,05 mm et 0,2 mm, et par exemple sensiblement égale à 0,1 mm.

De même, à chaque point est associée une valeur représentative du champ magnétique au niveau des récepteurs au moment de l'acquisition. La valeur représentative est par exemple la moyenne des résistances des magnétorésistances des récepteurs activés ou des tensions différentielles aux bornes des ponts de magnétorésistances suivant le type de récepteur utilisé..

De même que précédemment, la valeur est représentée par la coloration du point par une nuance de gris pour obtenir une cartographie représentant le tube.

Un exemple de cartographie 74 obtenue est représenté à la figure 6.

Etant donné que le champ magnétique terrestre perçu selon l'axe préférentiel est susceptible de varier après rotation de la sonde, au moins un ensemble 76 de lignes ou colonnes (suivant l'orientation du tube dans l'espace) est alors sensiblement plus foncé ou plus clair que le reste de la cartographie 74.

Pour chaque ligne de la cartographie 74, une valeur d'initialisation est déterminée. La valeur d'initialisation est, par exemple, la moyenne des valeurs représentatives des points de la ligne. En variante, la valeur d'initialisation est la valeur représentative d'un point de la ligne où l'on sait qu'il n'y a pas de défauts.

Puis, pour chaque point, à la valeur représentative est soustraite la valeur d'initialisation de la ligne à laquelle le point appartient.

Après ce traitement d'image, on obtient une cartographie dans laquelle la variation du champ magnétique terrestre est estompée, par exemple semblable à celle obtenu après l'étape d'acquisition du premier mode de réalisation représentée à la figure 3.

En variante, le courant de polarisation est modifié au cours de l'acquisition suivant le positionnement angulaire et longitudinal des éléments de la sonde, de manière à compenser les variations du champ magnétique terrestre.

Puis, de même que précédemment, un traitement d'image permettant de lisser les effets de bord est éventuellement appliqué.

On détecte ensuite les zones de points pour lesquels la valeur représentative est sensiblement différente de la moyenne de l'ensemble des valeurs représentatives. Ce rapport (rapport signal à bruit) est, par exemple, supérieur ou égal à 3 dB.

Les récepteurs étant sensibles au champ magnétique suivant une direction préférentielle, les défauts détectés sont suivant cette direction préférentielle. Ainsi ces zones 70 correspondent à des défauts circonférentiels, dont on peut estimer les dimensions.

En variante, au cours de l'étape d'acquisition, la sonde n'est pas déplacée en rotation.

Au cours de l'étape d'acquisition, la sonde est déplacée longitudinalement d'une première extrémité du tube à analyser à une deuxième extrémité du tube à analyser. La vitesse de déplacement de la sonde est par exemple comprise entre 5mm/s et 1000mm/s.

L'étape d'acquisition est réalisée par acquisitions successives d'une circonférence du tube. Le pas des acquisitions de circonférence suivant la direction longitudinale X est compris entre 0,05 mm et 0,2 mm, et par exemple sensiblement égale à 0,1 mm.

Pour chaque acquisition de circonférence, un premier ensemble de quatre inducteurs est activé, les autres inducteurs étant désactivés. Les quatre inducteurs sont tels que décrit précédemment, c'est-à-dire deux inducteurs adjacents 16, 20 de la première rangée 43 d'inducteurs et les inducteurs 18, 22 de la deuxième rangée 44 reliés à ces inducteurs 16, 20 comme représenté à la figure 5. De même que précédemment, un récepteur 23a, 23c, 24d, 24b seulement est activé par inducteur 16, 18, 20, 22 aux bornes duquel une tension est injectée. Pour chaque inducteur, le récepteur activé est du côté de l'inducteur adjacent sous tension.

Cette étape est répétée jusqu'à ce que tous les ensembles différents de quatre inducteurs comprenant deux inducteurs adjacents 16, 20 de la première rangée 43 d'inducteurs et les inducteurs 18, 22 de la deuxième rangée 44 reliés à ces inducteurs 16, 20, ainsi que les récepteurs correspondant, ont été activés.

Cela permet d'obtenir une acquisition d'une circonférence du tube en un emplacement longitudinal donné.

A la fin de l'étape d'acquisition, une cartographie est obtenue à partir de l'ensemble des circonférences du tube acquises avec le pas selon la direction longitudinale X.

L'activation successive des différents inducteurs et récepteurs est, par exemple, réalisée à l'aide d'au moins un multiplexeur, de manière à sélectionner les entrées correspondant à un inducteur ou récepteur à activer.

Le procédé d'inspection et l'ensemble d'inspection de l'invention permettent ainsi de détecter de manière fiable et rapide les défauts suivant une direction privilégiée au sein d'un tube.

Ainsi, on s'intéresse ici aux défauts circonférentiels : les défauts longitudinaux ne sont pas détectés. De même, dans les réseaux de défauts, seules les parties circonférentielles sont détectées. Les défauts longitudinaux n'altèrent pas l'estimation des dimensions des défauts circonférentiels.

La détection de défauts circonférentiels est particulièrement utile dans le contrôle des tubes de générateur de vapeur de centrale nucléaire en vue de la détection de défauts de fissuration.

## Revendications

1. Ensemble d'inspection (10) de tubes, comprenant une sonde à courants de Foucault (14), la sonde (14) comprenant une pluralité d'inducteurs (16 à 22) et une pluralité de récepteurs (23, 24), les récepteurs (23, 24) étant des magnétorésistances possédant une zone de fonctionnement sensiblement linéaire, les inducteurs (16 à 22) de la sonde (14) étant reliés à un contrôleur (26), le contrôleur (26) étant programmé pour injecter aux bornes des inducteurs (16 à 22) une tension, **caractérisé en ce que** la tension a une composante sinusoïdale et une composante continue non nulles, les récepteurs (23, 24) ayant alors un point de polarisation compris dans la zone de fonctionnement sensiblement linéaire.

2. Ensemble d'inspection selon la revendication 1, **caractérisé en ce que** les inducteurs (16 à 22) sont placés selon au moins une première et une deuxième rangées (43, 44), la première rangée (43) s'étendant suivant une direction latérale (Y), la deuxième rangée (44) s'étendant parallèlement à la première rangée (43) et étant décalée par rapport à la première rangée (43) suivant une direction longitudinale (X).

3. Ensemble d'inspection selon la revendication 2, **caractérisé en ce que** chaque rangée (43, 44) d'inducteurs (16 à 22) comprend le même nombre d'inducteurs(16 à 22), les inducteurs (16 à 22) d'une même rangée étant espacés latéralement régulièrement, les inducteurs (16, 20) de la première rangée (43) étant décalés par rapport aux inducteurs (18, 22) de la deuxième rangée (44) longitudinalement et latéralement, chaque inducteur (18, 22) de la deuxième rangée (44) étant relié en série à un inducteur (16, 20) de la première rangée (43).

4. -Ensemble d'inspection selon l'une quelconque des revendications 1 à 3, **caractérisé en ce que** chaque inducteur (16 à 22) a la forme d'un anneau rectangulaire, comprenant une première et une deuxième branches (38, 40) parallèles et au moins une bande d'extrémité (42) raccordant des extrémités respectives des première et deuxième branche (38, 40), un courant circulant dans chaque inducteur (16 à 22), le courant circulant dans la première branche (38) ayant un sens opposé au courant circulant dans la deuxième branche (40).

5. Ensemble d'inspection selon la revendication 4, **caractérisé en ce qu'**un récepteur est placé au niveau de chaque première branche (38) et de chaque deuxième branche (40).

6. -Ensemble d'inspection selon l'une quelconque des revendications 1 à 5, **caractérisé en ce que** l'ensemble d'inspection (10) comprend un corps (30), s'étendant suivant un axe principal, et un film flexible (28) sur lequel sont montés les inducteurs (16 à 22) et les récepteurs (23, 24), le film flexible (28) étant enroulé autour du corps (30).

7. Ensemble d'inspection selon la revendication 6, **caractérisé en ce que** le film flexible (28) est pourvu d'entailles (46), les entailles (46) étant placées parallèles à l'axe principal du corps (30).

8. Ensemble d'inspection selon la revendication 7, **caractérisé en ce que** l'ensemble d'inspection (10) comprend une mousse (32), la mousse (32) étant placée entre le corps (30) et le film flexible (28), la mousse (32) étant apte à s'expanser.

9. -Procédé d'inspection de tubes mettant en oeuvre un ensemble d'inspection (10) selon l'une quelconque des revendications 1 à 8, la tension ayant une composante sinusoïdale et une composante continue non nulles, la tension étant injectée aux bornes d'une pluralité d'inducteurs (16 à 22) au cours d'une étape d'acquisition d'un tube (12), la tension présentant de préférence une fréquence comprise entre 1 kHz et 10 MHz.

10. Procédé d'inspection selon la revendication 9, **caractérisé en ce qu'**au cours de l'étape d'acquisition, la sonde (14) est déplacée en translation au sein du tube (12), la tension étant injectée dans l'ensemble des inducteurs (16 à 22), et tous les récepteurs (23, 24) de la sonde étant activés.

11. Procédé d'inspection selon la revendication 9, mettant en oeuvre un ensemble d'inspection (10) selon les revendications 3 et 5 **caractérisé en ce qu'**au cours de l'étape d'acquisition, la tension est injectée dans deux inducteurs adjacents (16, 20) de la première rangée (43) d'inducteurs et les inducteurs associés (18, 22) de la deuxième rangée (44), un récepteur (23, 24) étant activé par inducteur, le récepteur activé étant du côté de l'inducteur adjacent sous tension.

12. Procédé d'inspection selon la revendication 11, **caractérisé en ce que**, au cours de l'étape d'acquisition, la sonde (14) est déplacée selon le mouvement suivant :
- déplacement longitudinal d'une première extrémité à une deuxième extrémité du tube à analyser,
- déplacement longitudinal de la deuxième extrémité à la première extrémité,
- rotation d'un angle donné,
- réitération des étapes précédentes jusqu'à avoir fait un tour d'au moins 360° sur elle-même,
au cours d'un des déplacements longitudinaux, une ligne (60) de points (62) du tube étant acquise par les récepteurs (23, 24), à chaque point (62) étant associée une valeur représentative du champ magnétique au niveau des récepteurs au moment de l'acquisition,
l'ensemble des lignes (60) acquises formant une cartographie (66) représentant le tube (12).

13. Procédé d'inspection selon la revendication 12, **caractérisé en ce que** pour chaque ligne (60), une valeur d'équilibrage est déterminée, la valeur d'équilibrage étant soustraite à chaque valeur respective des points (62) de la ligne (60).

14. -Procédé d'inspection selon l'une quelconque des revendications 9 à 13, **caractérisé en ce que**, au cours de l'étape d'acquisition, la sonde (14) est déplacée selon la direction longitudinale d'une première extrémité à une deuxième extrémité du tube à analyser, des acquisitions successives de circonférence du tube étant réalisées avec un pas d'acquisition pendant le déplacement,
l'ensemble des circonférences acquises formant une cartographie représentant le tube (12).

## Patentansprüche

1. Rohrinspektionseinheit (10), die eine Wirbelstromsonde (14) umfasst, wobei die Sonde (14) eine Vielzahl von Induktoren (16 bis 22) und eine Vielzahl von Empfängern (23, 24) umfasst, wobei die Empfänger (23, 24) Magnetwiderstände mit einem im Wesentlichen linearen Arbeitsbereich sind, wobei die Induktoren (16 bis 22) der Sonde (14) mit einem Controller (26) verbunden sind, wobei der Controller (26) programmiert ist, um an den Klemmen der Induktoren (16 bis 22) eine Spannung einzuleiten, **dadurch gekennzeichnet, dass** die Spannung eine Sinuskomponente und eine kontinuierliche Komponente ungleich Null hat, wobei die Empfänger (23, 24) dann einen Polarisationspunkt haben, der in dem im Wesentlichen linearen Betriebsbereich liegt.

2. Inspektionseinheit nach Anspruch 1, **dadurch gekennzeichnet, dass** die Induktoren (16 bis 22) in mindestens einer ersten und einer zweiten Reihe (43, 44) platziert sind, wobei sich die erste Reihe (43) in einer seitlichen Richtung (Y) erstreckt, wobei sich die zweite Reihe (44) parallel zu der ersten Reihe (43) erstreckt und im Verhältnis zu der ersten Reihe (43) in einer Längsrichtung (X) versetzt ist.

3. Inspektionseinheit nach Anspruch 2, **dadurch gekennzeichnet, dass** jede Reihe (43, 44) von Induktoren (16 bis 22) die gleiche Anzahl von Induktoren (16 bis 22) umfasst, wobei die Induktoren (16 bis 22) einer selben Reihe seitlich gleichmäßig beabstandet sind, wobei die Induktoren (16, 20) der ersten Reihe (43) in Bezug auf die Induktoren (18, 22) der zweiten Reihe (44) längs und seitlich versetzt sind, wobei jeder Induktor (18, 22) der zweiten Reihe (44) mit einem Induktor (16, 20) der ersten Reihe (43) in Reihe verbunden ist.

4. Inspektionseinheit nach einem der Ansprüche 1 bis 3, **dadurch gekennzeichnet, dass** jeder Induktor (16 bis 22) die Form eines rechteckigen Rings hat, der einen ersten und einen zweiten parallelen Schenkel (38, 40) und mindestens einen Endstreifen (42) aufweist, der die jeweiligen Enden des ersten und des zweiten Schenkels (38, 40) verbindet, wobei ein Strom in jedem Induktor (16 bis 22) fließt, wobei der im ersten Schenkel (38) fließende Strom eine entgegengesetzte Richtung zu dem im zweiten Schenkel (40) fließenden Strom hat.

5. Inspektionseinheit nach Anspruch 4, **dadurch gekennzeichnet, dass** an jedem ersten Schenkel (38) und jedem zweiten Schenkel (40) ein Empfänger angeordnet ist.

6. Inspektionseinheit nach einem der Ansprüche 1 bis 5, **dadurch gekennzeichnet, dass** die Inspektionseinheit (10) einen Körper (30) umfasst, der sich entlang einer Hauptachse erstreckt, und eine flexible Folie (28), auf der die Induktoren (16 bis 22) und die Empfänger (23, 24) angebracht sind, wobei die flexible Folie (28) um den Körper (30) gewickelt ist.

7. Inspektionseinheit nach Anspruch 6, **dadurch gekennzeichnet, dass** die flexible Folie (28) mit Einschnitten (46) versehen ist, wobei die Einschnitte (46) parallel zur Hauptachse des Körpers (30) angeordnet sind.

8. Inspektionseinheit nach Anspruch 7, **dadurch gekennzeichnet, dass** die Inspektionseinheit (10) einen Schaumstoff (32) umfasst, wobei der Schaumstoff (32) zwischen dem Körper (30) und der flexiblen Folie (28) angeordnet ist, wobei der Schaumstoff (32) expandierbar ist.

9. Verfahren zur Inspektion von Rohren unter Verwendung einer Inspektionseinheit (10) nach einem der Ansprüche 1 bis 8, wobei die Spannung eine Sinuskomponente und eine kontinuierliche Komponente ungleich Null hat, wobei die Spannung während eines Schritts zur Erfassung eines Rohrs (12) an den Klemmen einer Vielzahl von Induktoren (16 bis 22) eingeleitet wird, wobei die Spannung vorzugsweise eine Frequenz zwischen 1 kHz und 10 MHz aufweist.

10. Inspektionsverfahren nach Anspruch 9, **dadurch gekennzeichnet, dass** während des Erfassungsschritts die Sonde (14) innerhalb des Rohrs (12) translatorisch bewegt wird, wobei die Spannung in alle Induktoren (16 bis 22) eingeleitet wird, und wobei alle Empfänger (23, 24) der Sonde aktiviert sind.

11. Inspektionsverfahren nach Anspruch 9, bei dem eine Inspektionseinheit (10) nach den Ansprüchen 3 und 5 verwendet wird, **dadurch gekennzeichnet, dass** während des Erfassungsschritts die Spannung in zwei benachbarte Induktoren (16, 20) der ersten Induktorreihe (43) und die Induktoren (18, 22), die der zweiten Reihe (44) zugeordnet sind, eingeleitet wird, wobei ein Empfänger (23, 24) je Induktor aktiviert wird, wobei der aktivierte Empfänger auf der Seite des benachbarten Induktors unter Spannung ist.

12. Inspektionsverfahren nach Anspruch 11, **dadurch gekennzeichnet, dass** die Sonde (14) während des Erfassungsschritts gemäß der folgenden Bewegung bewegt wird:
- Längsbewegung von einem ersten Ende zu einem zweiten Ende des zu analysierenden Rohrs,
- Längsbewegung vom zweiten Ende zum ersten Ende,
- Drehung um einen bestimmten Winkel,
- Wiederholen der vorherigen Schritte, bis sie sich um mindestens 360° um die eigene Achse gedreht hat,
während einer der Längsbewegungen, Erfassen einer Linie (60) von Punkten (62) des Rohrs von den Empfängern (23, 24), wobei jedem Punkt (62) ein Wert zugeordnet ist, der für das Magnetfeld an den Empfängern zum Zeitpunkt der Erfassung repräsentativ ist,
wobei die Gesamtheit der erfassten Linien (60) eine Kartografie (66) bildet, die das Rohr (12) darstellt.

13. Inspektionsverfahren nach Anspruch 12, **dadurch gekennzeichnet, dass** für jede Linie (60) ein Ausgleichswert bestimmt wird, wobei der Ausgleichswert von jedem jeweiligen Wert der Punkte (62) der Linie (60) subtrahiert wird.

14. Inspektionsverfahren nach einem der Ansprüche 9 bis 13, **dadurch gekennzeichnet, dass** während des Erfassungsschrittes die Sonde (14) in Längsrichtung von einem ersten Ende zu einem zweiten Ende des zu analysierenden Rohrs bewegt wird, wobei während der Bewegung aufeinanderfolgende Erfassungen des Umfangs des Rohrs mit einem Erfassungsschritt durchgeführt werden,
wobei die Gesamtheit der erfassten Umfänge eine Kartografie bildet, die das Rohr (12) darstellt.

## Claims

1. A tube inspection unit (10), comprising an eddy current probe (14), the probe (14) comprising a plurality of inductors (16 to 22) and a plurality of receivers (23, 24), the receivers (23, 24) being magnetoresistances having a substantially linear functional zone, the inductors (16 to 22) of the probe (14) being connected to a controller (26), the controller (26) being programmed to inject, at the terminals of the inductors (16 to 22), a voltage, **characterized in that** the voltage has a sinusoidal component and a direct-current component that are non-nil, the receivers (23, 24) then having a polarization center situated in the substantially linear functional zone.

2. The inspection unit according to claim 1, **characterized in that** the inductors (16 to 22) are placed in at least a first and a second row (43, 44), the first row (43) extending along a lateral direction (Y), the second row (44) extending parallel to the first row (43) and being offset relative to the first row (43) in a longitudinal direction (X).

3. The inspection unit according to claim 2, **characterized in that** each row (43, 44) of inductors (16 to 22) comprises the same number of inductors (16 to 22), the inductors (16 to 22) of a same row being spaced laterally regularly apart, the inductors (16, 20) of the first row (43) being offset relative to the inductors (18, 22) of the second row (44) longitudinally and laterally, each inductor (18, 22) of the second row (44) being connected in series to an inductor (16, 20) of the first row (43).

4. The inspection unit according to any one of claims 1 to 3, **characterized in that** each inductor (16 to 22) is in the form of a rectangular ring, comprising a first and a second branch (38, 40) that are parallel and at least one end strip (42) connecting respective ends of the first and second branch (38, 40), a current circulating in each inductor (16 to 22), the current circulating in the first branch (38) having a direction opposite the current circulating in the second branch (40).

5. The inspection unit according to claim 4, **characterized in that** a receiver is placed at each first branch (38) and each second branch (40).

6. The inspection unit according to any one of claims 1 to 5, **characterized in that** the inspection unit (10) comprises a body (30), extending along a main axis, and a flexible film (28) on which the inductors (16 to 22) and the receivers (23, 24) are mounted, the flexible film (28) being wound around the body (30).

7. The inspection assembly according to claim 6, **characterized in that** the flexible film (28) is provided with notches (46), the notches (46) being placed parallel to the main axis of the body (30).

8. The inspection assembly according to claim 7, **characterized in that** the inspection unit (10) comprises a foam (32), the foam (32) being placed between the body (30) and the flexible film (28), the foam (32) being able to expand.

9. A tube inspection method implementing an inspection unit (10) according to any one of claims 1 to 8, the voltage having a sinusoidal component and a direct-current component that are non-nil, the tension being injected at the terminals of a plurality of inductors (16 to 22) during an acquisition step of a tube (12), the voltage having preferably a frequency of between 1 kHz and 10 MHz.

10. The inspection method according to claim 9, **characterized in that** during the acquisition step, the probe (14) is moved in translation within the tube (12), the voltage being injected into the set of inductors (16 to 22), and all of the receivers (23, 24) of the probe being activated.

11. The inspection method according to claim 9, implementing an inspection unit (10) according to claims 3 and 5, **characterized in that** during the acquisition step, the voltage is injected into two adjacent inductors (16, 20) of the first row (43) of inductors and the associated inductors (18, 22) of the second row (44), one receiver (23, 24) being activated per inductor, the activated receiver being on the side of the adjacent live inductor.

12. The inspection method according to claim 11, **characterized in that**, during the acquisition step, the probe (14) is moved according to the following movement:
- longitudinal movement from a first end to a second end of the tube to be analyzed,
- longitudinal movement from the second end to the first end,
- rotation by a given angle,
- reiteration of the preceding steps until performing a rotation of at least 360° around itself,
during one of the longitudinal movements, a line (60) of points (62) of the tube being acquired by the receivers (23, 24), at each point (62) being associated with a value representative of the magnetic field at the receivers during the acquisition,
the set of the acquired lines (60) forming a map (66) representing the tube (12).

13. The inspection method according to claim 12, **characterized in that** for each line (60), an equilibrium value is determined, the equilibrium value being subtracted from each respective value of the points (62) of the line (60).

14. The inspection method according to any one of claims 9 to 13, **characterized in that**, during the acquisition step, the probe (14) is moved in the longitudinal direction from a first end to a second end of the tube to be analyzed, successive circumference acquisitions of the tube being done with an acquisition pitch during the movement,
the set of the acquired circumferences forming a map representing the tube (12).
